(19) Europäisches Patentamt
European Patent Office
Office européen des brevets

(11) **EP 2 946 606 B1**

(12) **EUROPEAN PATENT SPECIFICATION**

(45) Date of publication and mention
of the grant of the patent:
**18.09.2024   Bulletin 2024/38**

(21) Application number: **13871351.6**

(22) Date of filing: **06.09.2013**

(51) International Patent Classification (IPC):
*H04W 48/08* (2009.01)      *H04W 24/00* (2009.01)

(52) Cooperative Patent Classification (CPC):
**H04L 5/0035; H04L 5/0055; H04L 5/0092;
H04L 5/0096; H04W 12/0431; H04W 36/00692;
H04W 72/0446;** H04L 1/18; H04L 5/0076;
H04W 84/045; Y02D 30/70

(86) International application number:
**PCT/US2013/058582**

(87) International publication number:
**WO 2014/113076 (24.07.2014 Gazette 2014/30)**

(54) **DISCOVERY SIGNAL IN CLUSTER-BASED SMALL CELL**

ENTDECKUNGSSIGNAL IN CLUSTERBASIERTE KLEINER ZELLE

SIGNAL DE DÉCOUVERTE DANS UNE PETITE CELLULE EN GRAPPE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **17.01.2013   US 201361753914 P**

(43) Date of publication of application:
**25.11.2015   Bulletin 2015/48**

(73) Proprietor: **Apple Inc.
Cupertino, CA 95014 (US)**

(72) Inventors:
• **HAN, Seunghee
Anyang-shi, Kyoungki-do 431-764 (KR)**
• **HEO, Youn Hyoung
Seoul 11 150-705 (KR)**
• **FWU, Jong-Kae
Sunnyvale, California 94087 (US)**
• **DAVYDOV, Alexei
603132 Nizhny Novgorod
NIZ (RU)**

(74) Representative: **Rooney, John-Paul
Withers & Rogers LLP
2 London Bridge
London SE1 9RA (GB)**

(56) References cited:
KR-A- 20120 135 871      US-A1- 2009 122 839
US-A1- 2009 135 804      US-A1- 2010 067 500
US-A1- 2010 190 488      US-A1- 2012 213 109
US-A1- 2012 309 394      US-A1- 2014 204 853

• DAN KEUN SUNG: "Mobile Communications
Systems", KAIST, 2000
• YI-PIN ERIC WANG: "Cell Search in W-CDMA",
JSAC, vol. 18, no. 8, August 2000 (2000-08-01),
pages 1470 - 1482, XP011450061

EP 2 946 606 B1

Description

FIELD OF INVENTION

Embodiments described herein relate generally to the technical field of data processing, and more particularly, to wireless networks provided by cells to user equipment.

BACKGROUND

The background description provided herein is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure. Unless otherwise indicated herein, the approaches described in this section are not prior art to the claims in the present disclosure and are not admitted to be prior art by the inclusion in this section.

To manage increased traffic on mobile networks, some mobile network traffic can be accommodated through the use of small cells. A small cell is typically provided through a low-powered radio access node that operates in licensed and unlicensed spectrums. These low-powered radio access nodes have a transmission power that is less than that of a macro node or other high-powered cellular base station. For example, the range of such low-powered radio access nodes is often between ten (10) meters to two (2) kilometers, whereas the range of a macro node might be several tens of kilometers.

The low-powered radio access nodes that are to provide small cells may be embodied in a number of different systems. A common low-powered radio access node is a femtocell cellular base station. A femtocell connects to a service provider's network through a broadband connection (*e.g.,* cable or digital subscriber line), thereby allowing that service provider to extend service coverage indoors or at a cell edge where network access might otherwise be limited. Other common small cells include, among others, picocells and microcells. In order to realize the increased service coverage and/or network capacity provided by a small cell, a user equipment ("UE") operating on the network may be served by that small cell.

US 2010/067500 A1 discloses a system having a pilot channel for transmitting a pilot signal and reference symbol is used for the mobile station to estimate the channel or measure the channel quality indicator (CQI). Also, the pilot channel is used for a mobile station to identify the cell to which the mobile station belongs by using the cell group information acquired through the primary synchronization channel and the secondary synchronization channel and the frame time information of the cell. For this purpose, the pilot channel is generated based on a random sequence commonly allocated to the cell group and an orthogonal sequence allocated to the cell. That is, in order to identify the cell to which the mobile station belongs, the mobile station searches for the random sequence that corresponds to the cell group found in the secondary synchronization channel and the orthogonal sequence that is allocated to the cell and thereby identifies the corresponding cell.

US 2010/190488 A1 discloses a method of transmitting an aggregated measurement report to a network in an Evolved Universal Mobile Telecommunications System (E-UMTS) evolved from the Universal Mobile Telecommunications System (UMTS) or a Long Term Evolution (LTE) system.

US 2012/0213109 A1 discloses a discovery reference signal designed for coordinated multipoint operations in heterogeneous networks. Techniques are disclosed that include receiving distinct discovery reference signals (RSs) transmitted from a plurality of different transmission points involved in coordinated multipoint (CoMP) operations with the UE, calculating path loss estimations for each of the transmission points based on the distinct discovery RSs, and performing a random access channel (RACH) procedure with a transmission power level set based on the path loss estimations.

US 2014/0204853 A1 discloses a wireless communication system and method using distributed antennas. A physical channel and reference signal (RS) transmission/reception method for downlink and uplink communication using a plurality of points is provided for a case in which the plurality of points have different physical cell identities (PCIs), or in a wireless communication environment using distributed antennas in which the plurality of points belong to the same cell and have the same PCI. Also, a method of transmitting a physical channel and an RS in an uplink and a downlink by introducing a virtual cell identity (VCI) is provided. Further, a cooperative transmission method using a plurality of points is provided, so that communication efficiency of a wireless communication system using distributed antennas can be improved.

The article "cell search in W-CDMA" by Yi-Pin Eric Wang, IEEE Journal on selected areas in communications, vol. 18, No. 8, August 2000 discloses algorithms and results for both initial and target cell search scenarios for the wideband CDMA standard.

## BRIEF DESCRIPTION OF THE DRAWINGS

The embodiments described herein are illustrated by way of example and not by way of limitation in the figures of the accompanying drawings in which like references indicate similar elements. It should be noted that references to "an" or "one" embodiment in this disclosure are not necessarily to the same embodiment, and they mean at least one.

Figure 1 is an exemplary wireless communication network, according to one embodiment.
Figure 2 is a conceptual block diagram depicting nodes in a wireless network environment that are to transmit discovery signals to user equipment, according to one embodiment.
Figure 3 is a flow diagram illustrating a method for detecting a cell based on a discovery signal by a UE, according to one embodiment.
Figure 4 is a flow diagram depicting a method for transmitting a sequence to a UE, according to one embodiment.
Figure 5 is a flow diagram depicting a method for transmitting a sequence to a UE, according to one embodiment.
Figure 6 is a flow diagram depicting a method for detecting cells by a UE in a wireless network environment, according to one embodiment.
Figure 7 is a block diagram of a computing device adapted to operate in a wireless communication network, according to one embodiment.

## DETAILED DESCRIPTION

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents. Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrases "A or "B" and "A and/or B" mean (A), (B), or (A and B). For the purposes of the present disclosure, the phrase "A, B, and/or C" means (A), (B), (C), (A and B), (A and C), (B and C), or (A, B, and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the terms "module" and/or "logic" may refer to, be part of, or include an Application Specific Integrated Circuit ("ASIC"), an electronic circuit, a processor (shared, dedicated, or group) and/or memory (shared, dedicated, or group) that execute one or more software or firmware programs, a combinational logic circuit, and/or other suitable components that provide the described functionality.

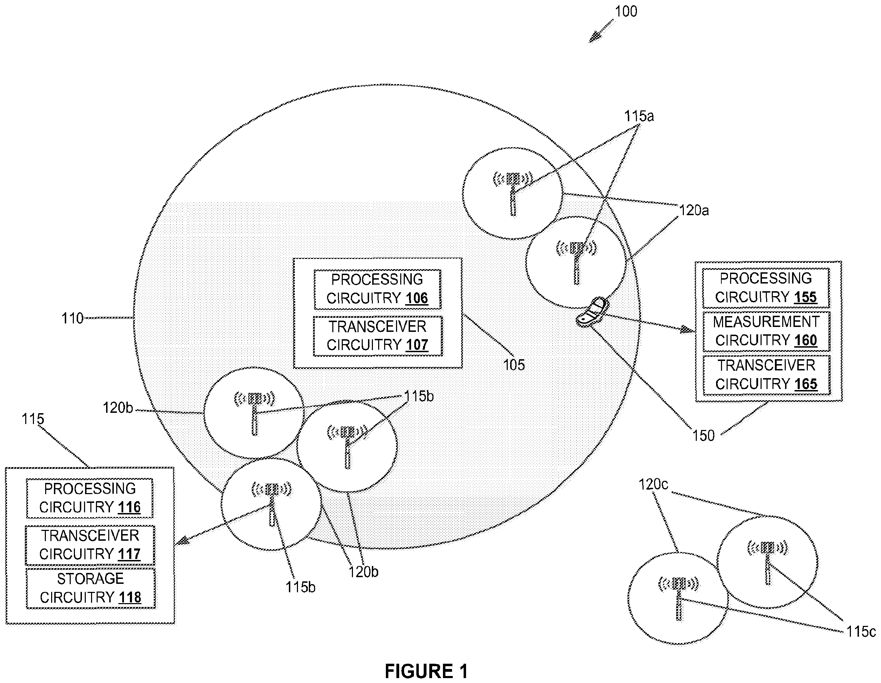

**Figure 1** illustrates an exemplary wireless communication network 100, according to one embodiment. The wireless communication network 100 (hereinafter "network 100") may be an access network of a 3rd Generation Partnership Project ("3GPP") long-term evolution ("LTE") network such as evolved universal mobile telecommunication system ("UMTS") terrestrial radio access network ("E-UTRAN"). The network 100 features, among other elements, a relatively high-power base station, such as an evolved Node B ("eNB") 105, that is to provide a wireless macro cell 110. This wireless macro cell 110 provided by the eNB 105 may operate on a first frequency F1.

To serve a user equipment ("UE") 150 and otherwise administrate and/or manage wireless communication in the network 100, the eNB 105 includes processing circuitry 106 and transceiver circuitry 107. The processing circuitry 106 is adapted to perform various tasks in the network 100, including, but not limited to, providing a wireless cell that is to serve the UE 150, generating base and orthogonal sequences, and/or generating conjugate sequences from at least one of base sequences and orthogonal sequences. The transceiver circuitry 107 is adapted to transmit data to and receive data from low-powered radio access nodes 115 and/or the UE 150; for example, the transceiver circuitry 107 may cause a base and/or orthogonal sequence to be transmitted to a low-powered radio access node 115.

In the network 100, the UE 150 is to connect with the eNB 105 where the UE is within the wireless macro cell 110. The UE 150 may be any device adapted to connect with the eNB 105 according to, for example, the 3GPP specification, such as a hand-held telephone, a laptop computer, or other similar device equipped with a mobile broadband adapter. According to the embodiment, the UE 150 may be adapted to administrate one or more tasks in the network 100, including mobility management, call control, session management, and identity management.

To process data, communicate with the eNB 105 and/or the nodes 115, or otherwise function in the network 100, the UE 150 includes but is not limited to, processing circuitry 155, measurement circuitry 160, communication circuitry 165, and transceiver circuitry 170. The processing circuitry 155 is adapted to perform a plurality of tasks for the UE 150, such as detecting physical signals (*e.g.*, discovery signals, primary synchronization signals, secondary synchronization signals, and/or reference signals) transmitted by one or both of the eNB 105 and the nodes 115, identifying the identities of one or more cells 110, 120 (*e.g.*, a physical layer cell identity and/or a global cell identity), reading information blocks (*e.g.*, master information blocks and/or system information blocks) so that the UE 150 may camp on a cell 110, 120 and/or performing RRM tasks. The measurement circuitry 160 is adapted to perform RRM measurements associated with the eNB 105 and/or a node 115. Finally, the transceiver circuitry 170 is adapted to send data to and receive data (*e.g.*, measured RRM metric values, cell identities, physical signals, etc.) from the eNB 105, a node 115, or another data source/recipient.

Also included in the wireless network environment 100 is a plurality of low-powered radio access nodes 115. The plurality of low-powered radio access nodes 115 are to provide a plurality of small cells 120. According to the embodiment, the plurality of small cells 120 may include one or more of a femtocell, picocell, microcell, remote radio head ("RRH"), or essentially any similar cell having a range of about less than two (2) kilometers ("km"). The small cells 120 may operate on a second frequency F2 that is different than the first frequency F1 (although the two frequencies may be the same in alternative embodiments). In this arrangement, the UE may be provided both macro-layer and local-node layer coverage. With the benefit of such coverage, the bandwidth and/or network reliability (*e.g.*, near the edge of macro cell 110) may be increased for the UE 150 through such as data offloading, carrier aggregation, and other similar technologies. In the illustrated embodiment, the range of the macro cell 110 may be insufficient to reach each small cell 120 of the plurality, and therefore not all of the plurality of small cells 120 have macro-layer coverage.

To efficiently serve the UE 150 in the network 100 while concurrently conserving resources (*e.g.,* power) and mitigating intercellular interference, a node 115 may include processing circuitry 116, transceiver circuitry 117, and storage circuitry 118. The processing circuitry 116 may be adapted to perform various tasks in the network 100, including, but not limited to, providing a wireless cell that is to serve the UE 150, generating base and orthogonal sequences, and/or generating conjugate sequences from at least one of base sequences and orthogonal sequences. The transceiver circuitry 117 may be adapted to transmit data to and receive data from the eNB 105 and/or the UE 150; for example, the transceiver circuitry 117 may receive a base and/or orthogonal sequence or a conjugate thereof from the eNB 105. In one embodiment, the transceiver circuitry 117 is adapted to transmit a discovery signal (*e.g.,* a signal that includes one or both of a base sequence and orthogonal sequence or a conjugate thereof) to the UE 150. Such a discovery signal may be transmitted with a relatively long periodicity to conserve power of a node 115 and reduce interference with signals broadcast by another node 115.

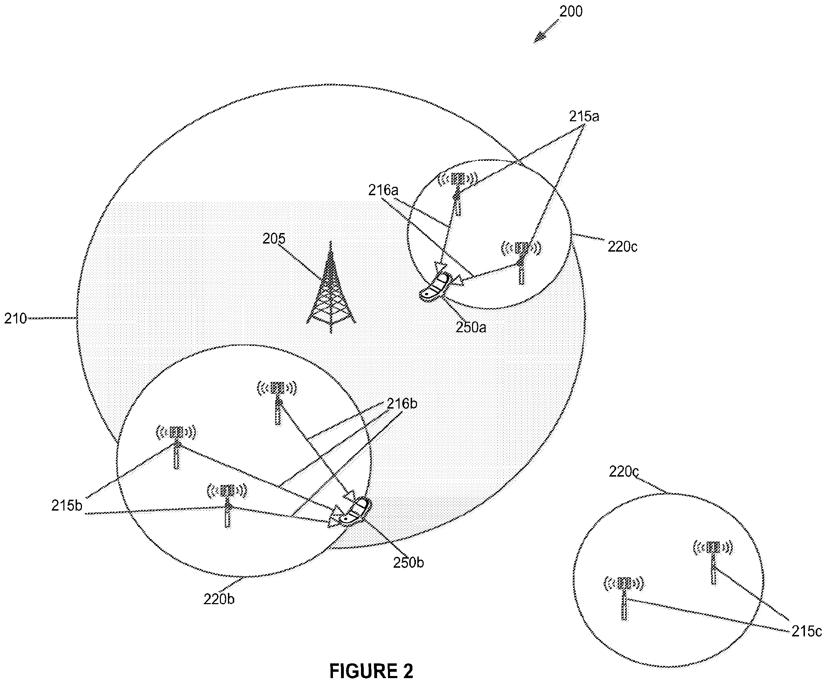

Turning now to **Figure 2,** a conceptual block diagram depicts discovery signals for small cell clusters in a wireless network environment. In the wireless network environment 200, an eNB 205 is to provide a wireless macro cell 210 adapted to serve one or more UE(s) 250 (which may be embodiments of the eNB 105 and the UE 150 of **Figure 1,** respectively). Additionally, the wireless network environment 200 may include a plurality of low-powered radio access nodes 215 (*e.g.,* the nodes 115) which may be adapted to provide small cell coverage that is complementary to or outside of the coverage of the macro cell 210. Groups of nodes 215a-c may be proximate to one another in the wireless network environment 200 so that overlay or extended coverage may be provided in small cell clusters 220a-c. The small cell clusters 220a-c may offer resources for mobile data offloading, carrier aggregation, extended coverage, or carrier service outside the macro cell 210.

Inherently, nodes 215 in a small cell cluster 220 are collocated in the wireless network environment 200 and, therefore, signals transmitted by a first node 215a may interfere with signals transmitted by a second node 215a that is collocated with the first node 215a in a small cell cluster 220a. This interference may be particularly problematic in instances in which nodes 215 perpetually transmit signals - *e.g.,* all nodes 215b in a small cell cluster 220b are adapted to transmit always-on physical signals. Furthermore, always-on signal transmission may be resource intensive for a node 215 and/or UE 250 (*e.g.,* through the power consumed by constantly transmitting and receiving physical signals, respectively).

To mitigate signal interference between nodes 215 in a small cell cluster 220 as well as conserve resources at a node 215 and/or UE 250, a node 215 may be adapted to transmit a discovery signal 216. Where a UE 250 is within range of a node 215, that UE 250 may receive a discovery signal 216 from that node 215 and determine (*e.g.,* either alone or in combination with the eNB 205) whether to join a small cell provided by that node 215. Subsequently, the UE 250 may join a small cell provided by a node 215 and receive transmissions from the node 215 that is then serving the UE 250 (*e.g.,* by issuing a request to the node 215 for broadcast transmission so that the UE may perform cellular synchronization).

A discovery signal 216 may operate on a new carrier type so that, for example, cell-specific or other common reference signals may be omitted. A discovery signal 216 transmitted by a node 215 may feature further optimizations to reduce interference and/or conserve resources, such as, for example, a higher time density of the discovery signal 216 within a short time period (*e.g.,* subframe) to improve detection by a UE 250 and/or a relatively long periodicity to conserve transmission power at the transmitting node 215 as well as reception power at the receiving UE 250.

In some embodiments, a discovery signal 216 may include identifying information. For example, a discovery signal 216 may include a signature and/or sequence (*e.g.,* a base and/or orthogonal sequence) to distinguish a small cell 215 in a cluster 220 of small cells and/or distinguish a first small cell cluster 220a from a second small cell cluster 220b. The inclusion of a signature and/or sequence in a discovery signal 216 may resolve issues of physical layer cell identity ("PCI") confusion and/or collision at one or both of the eNB 205 and a UE 250 where the eNB 205 and/or UE 250 is, for example, measuring and/or reporting Radio Resource Management ("RRM") metric values for a small cell provided by a node 215. In the context of wireless networking, PCI confusion describes an environment in which a first small cell provided by a first node 215a within a first small cell cluster 220a is identified with the same PCI as that of a second small cell provided by a second node 215b within a second small cell cluster 220b. Although a UE 250 may receive physical signals (not shown) from both nodes 215a, 215b and report measurement values to the eNB 205 for the cells provided by those nodes 215a, 215b, the eNB 205 may be unable to differentiate between measurement values reported for the first cell provided by the first node 215a and the second cell provided by the second node 215b based on a PCI reported with the measurement values (because the UE 250 may report different sets of measurement values but each set may be associated with the same PCI). PCI collision, however, refers to an environment in which a UE cannot distinguish between two neighboring cells provided by two collocated nodes 215a because those neighboring cells use the same PCI.

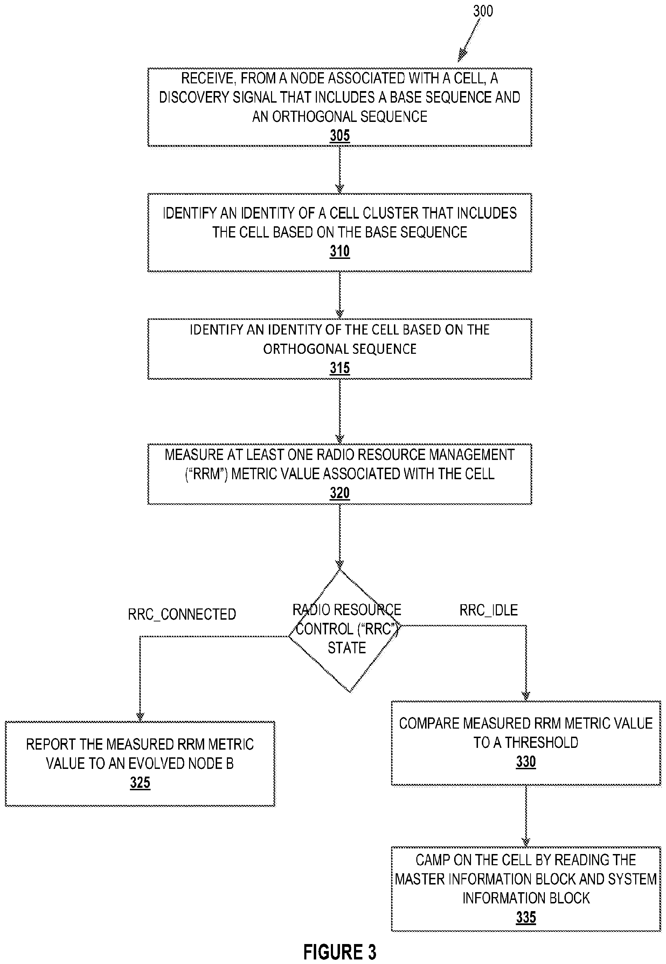

Now with reference to **Figure 3,** a flow diagram depicts a method 300 for detecting a small cell based on a discovery signal by a UE. The method 300 may be performed by a UE, such as the UE 150 in the network 100 shown in **Figure 1.** While **Figure 3** illustrates a plurality of sequential operations, one of ordinary skill would understand that one or more operations of the method 400 may be transposed and/or performed contemporaneously. The method 300 may be performed in a wireless network environment by a UE served by a macro cell. In another embodiment, the method 300 may be performed for handover between cells.

Beginning first with operation 305, the method 300 may include receiving a discovery signal from a node associated with a cell (*e.g.,* a small cell). The first synchronization signal may be broadcast by the cell in the downlink direction. A UE in which the method 300 is performed may scan the frequency spectrum and tune transceiver circuitry of the UE to a frequency (or band) at which a plurality of radio frames is transmitted. At that frequency, the UE may receive and decode a discovery signal transmitted by a node, such as a node that is collocated with at least one other node to form a cell cluster (*e.g.,* a cluster of small cells).

In the embodiment of the present invention the discovery signal includes at least two sequences: (1) a base sequence and (2) an orthogonal sequence. The base sequence may be, for example, a Zadoff-Chu sequence or a pseudorandom sequence. In connection with the base sequence, the method 300 includes an operation 310 of identifying an identity of a cluster that includes a cell associated with the node that transmitted the received discovery signal. A UE and/or an eNB providing a macro cell that serves the UE may distinguish nodes providing cells in a first cluster from nodes in a second cluster based on the base sequence. Accordingly, the UE and/or eNB may avoid PCI confusion and/or collision by identifying a cell cluster based on the base sequence.

In conjunction with identifying a cluster of cells, the cell that transmitted the received discovery signal may be identified within the cluster, as illustrated at operation 315. According to the embodiment, the identity of the cell may be all or part of a PCI or a global cell identity. A UE may identify the cell within the cluster of cells using the orthogonal sequence included in the discovery signal. The orthogonal sequence may be, for example, a code division multiplexed ("CDM") sequence (*e.g.,* time/frequency domain cyclic shifts, Walsh codes, density functional theory codes, etc.), a frequency division multiplexed ("FDM") sequence (*e.g.,* different subcarrier or subcarrier group allocation), or a time division multiplexed ("TDM") sequence (*e.g.,* different time units). In some embodiments, identifying both the cell cluster based on the base sequence and the cell within the cluster prevents PCI confusion and/or collision.

With the cell identified, the method 300 includes the subsequent operation 320 of measuring at least one measurement of a metric value. This measurement is to be performed for radio resource management ("RRM") so that radio transmission characteristics of the cell that transmitted the discovery signal can be observed. In one embodiment, a UE may perform cellular synchronization using primary and secondary synchronization signals transmitted by the node after the UE has received the discovery signal transmitted by the node. The UE may measure RRM metric values including, but not limited to, reference signal received power ("RSRP") and/or reference signal received quality ("RSRQ").

In the embodiment of the present invention the subsequent operations 325-335 of the method 300 may be contingent upon the radio resource control ("RRC") state of the UE receiving the discovery signal. Following the reception of the discovery signal, the UE establishs an RRC connection with the transmitting (and identified) node. In the RRC connected state with the node, the one or more measured RRM metric value(s) may be transmitted from the UE to an eNB (*e.g.,* an eNB providing a macro cell to the UE and having a coverage area that includes the identified node). Further, the UE may be adapted to transmit the identity (*e.g.,* PCI) corresponding to the identified cell. This eNB may be, for example, responsible for handover of the UE to another serving cell.

In some embodiments, the UE may report one or more measured RRM metric value(s) in response to an event and/or at an interval (*e.g.*, a predetermined interval). In the embodiment of the present invention the UE is to report a measured RRM metric value in response to determining a relationship of a measured RRM metric value to a threshold. For example, if the measured RRM metric value exceeds a threshold, then the UE reports the measured RRM metric value as a consequence of that relationship.

Conversely, the UE that is to receive the discovery signal may not establish an RRC connection with the identified cell. In this RRC idle state, the method 300 includes the operation 330 of comparing the measured RRM metric value to a threshold. The threshold may be predetermined in the UE and/or may be received from an eNB. If the measured RRM metric value fulfills a condition for cell selection or reselection (based on the relationship of the RRM metric value to the threshold), then the UE may camp on the identified cell, as illustrated at operation 335. In some embodiments, the UE may camp on the identified cell by reading one or both of the master information block and a system information block (*e.g.*, the system information block type 1), which are transmitted in the downlink direction from the identified node to the UE.

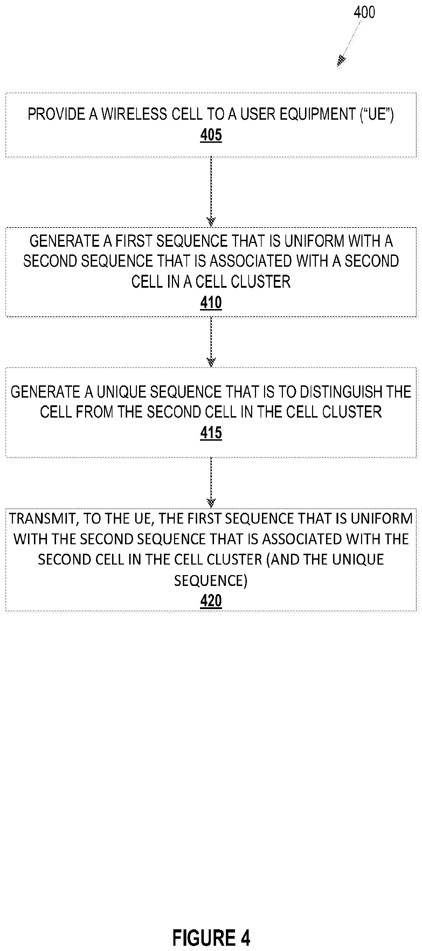

With reference to **Figure 4,** a flow diagram depicts a method 400 for transmitting a sequence to a UE, in accordance with some embodiments. The method 400 may be performed by a node, such as a low-powered radio access node 115 and/or the eNB 105 in the network 100 shown in **Figure 1.** While **Figure 4** illustrates a plurality of sequential operations, one of ordinary skill would understand that one or more operations of the method 400 may be transposed and/or performed contemporaneously.

Beginning first with operation 405, the method 400 includes an operation of providing a wireless cell that is to serve a UE in a wireless network environment. Depending upon the embodiment of the node in which the method 405 is performed, the cell provided by the node may be, for example, a macro cell or a small cell. In embodiments in which the wireless cell is a small cell, the small cell may be included in a cluster of small cells. In other embodiments in which the wireless cell is a macro cell, the macro cell may include overlay coverage from a cluster of small cells.

So that a UE and/or eNB may suitably identify the wireless cell provided by the node, the node may be associated with a base sequence that is uniform for all collocated cells (*e.g.*, all cells that comprise a cell cluster). In some embodiments, this sequence is generated at the node providing the wireless cell, as illustrated at operation 410. In other embodiments, however, operation 410 is absent. In such embodiments, the base sequence may be, for example, preconfigured (*e.g.*, hardcoded) at the node, received at the node from an eNB that is adapted to centrally manage the nodes in the cell cluster, configured through backhaul exchange, or configured through a self-organizing network ("SON").

Regardless of the location at which the base sequence is generated, the base sequence may be generated as, for example, a Zadoff-Chu sequence or a pseudorandom sequence (*e.g.*, a Gold sequence). For example, the base sequence may be a vector that is generated according to the function

$$\mathbf{B}u_0 = \frac{1}{\sqrt{2}}\left(1 - 2 \cdot c(2m)\right) + j\frac{1}{\sqrt{2}}\left(1 - 2 \cdot c(2m+1)\right), m = 0,1, \ldots;$$

where $c_{\text{init}} = f(u_0, N_{\text{CP}}, \text{and/or } n_s)$, $n_s$:slot number, and

$$N_{\text{CP}} = \begin{cases} 1, \text{for normal Cyclic Prefix} \\ 0, \text{for extended Cyclic Prefix} \end{cases}$$

. A pseudorandom sequence may be defined by a length-31 Gold sequence. The output sequence of $c(n)$ of length $M_{\text{PN}}$, where $n$=0, 1, ..., $M_{\text{PN}}$-1 may be defined by $c(n) = ((x_1(n + N_c) + x_2(n + N_c)) \bmod 2; x_1(n + 31) = ((x_1(n + 3) + x_1(n)) \bmod 2;$ and $x_2(n + 31) = ((x_2(n + 3) + x_2(n + 2) + x_2(n)) \bmod 2;$ where $N_c$=1600 and the first m-sequence is initialized with $x_1(0) = 1, x_1(n) = 0, n = 1,2, \ldots ,30$. The initialization of the second m-sequence is denoted by $c_{init} = \sum_{i=0}^{30} x_2(i) \cdot 2^i$ with the value depending on the application of the sequence.

In addition to the operation 410 for generating a uniform (*e.g.*, base) sequence, the method 400 may include an operation 415 for generating a unique sequence that is to distinguish the cell from another cell in the cell cluster (which may have the same uniform sequence). This unique sequence may be an orthogonal sequence. In some embodiments, operation 415 is omitted. In such embodiments, the unique sequence may be, for example, preconfigured (*e.g.*, hardcoded) at the node, received at the node from an eNB that is adapted to centrally manage the nodes in the cell cluster, configured through backhaul exchange, configured through a SON. In another embodiment, a unique sequence is entirely absent, and therefore only the uniform sequence is associated with the node providing the cell.

Similar to the uniform sequence, the unique (*e.g.*, orthogonal) sequence may be generated according to one or more algorithms regardless of the location at which the sequence is generated. In one embodiment the unique sequence, represented as a vector $\mathbf{W}u_1$, may be generated as a phase rotational sequence or cyclic shift sequence (*e.g.*, a CDM sequence or a variant thereof). In such an embodiment, $\mathbf{W}u_1$ may be generated according to the formula

$$\mathbf{W}u_1(m) = e^{j\frac{2\pi u_1 m}{N}}, u_1 = 0,1,\dots, N-1$$

. In another embodiment, $\mathbf{W}u_1$ may be generated as a FDM sequence. Here, $\mathbf{W}u_1$ may be generated according to the formula

$$\mathbf{W}u_1(m) = \begin{cases} 1, m = 6k + u_1, k \text{ is an integer valued frequency index} \\ 0, \text{otherwise} \end{cases}$$

; in case the number of orthogonal sequences in an orthogonal frequency-division multiplexing ("OFDM") symbol is six (6). In a third embodiment, $\mathbf{W}u_1$ may be generated as a TDM sequence according to the formula

$$\mathbf{W}u_1(m) = \begin{cases} 1, m = 6l + u_1, l \text{ is an integer valued time index} \\ 0, \text{otherwise} \end{cases}$$

; in case the number of orthogonal sequences is six (6) (*n.b.,* a valued time index may be, for example, an OFDM symbol or subframe index). In even another embodiment, $\mathbf{W}u_1$ may be a hybrid of two or more of CDM, FDM, and TDM sequences.

As illustrated, the method 400 includes the operation 420 of transmitting the uniform (*e.g.,* base) sequence to the UE. In one embodiment, the uniform sequence is transmitted specifically to the UE (*e.g.,* using beamforming). In other embodiments, however, the uniform sequence may be broadcast so that the uniform sequence is detectable by a plurality of UEs that are within a coverage area of the transmitting node. Also at operation 420, the unique (*e.g.,* orthogonal) sequence may be transmitted to the UE.

The uniform sequence may be included in a discovery signal that operates on a new carrier type. In one embodiment of operation 420, the uniform sequence and the unique sequence are transmitted to the UE in a discovery signal. For example, if the uniform sequence is a first vector $\mathbf{B}u_0$ and the unique sequence is a second vector $\mathbf{W}u_1$, then the discovery signal may include a vector $\mathbf{d}u = \mathbf{d}u_{0,1} = \mathbf{B}u_0 \otimes \mathbf{W}u_1$, where $\otimes$ represents element-by-element multiplication. The discovery signal may be then be transmitted so that cells (*e.g.,* small cells) and clusters of cells (*e.g.,* small cell clusters) may be detected and/or differentiated in a wireless network environment so that issues related to, for example, PCI confusion and/or collision may be avoided.

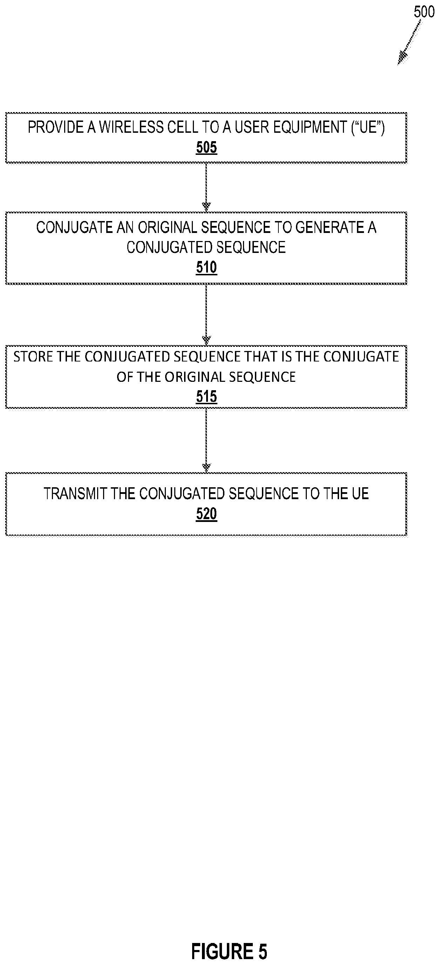

Now with respect to **Figure 5,** a flow diagram depicts a method 500 for transmitting a sequence to a UE, in accordance with some embodiments. The method 500 may be performed by a node, such as a low-powered radio access node 115 and/or the eNB 105 in the network 100 shown in **Figure 1.** While **Figure 5** illustrates a plurality of sequential operations, one of ordinary skill would understand that one or more operations of the method 500 may be transposed and/or performed contemporaneously.

Beginning first with operation 505, the method 500 includes an operation of providing a wireless cell that is to serve a UE in a wireless network environment. Depending upon the embodiment of the node in which the method 505 is performed, the cell provided by the node may be, for example, a macro cell or a small cell. In embodiments in which the wireless cell is a small cell, the small cell may be included in a cluster of small cells. In other embodiments in which the wireless cell is a macro cell, the macro cell may include overlay coverage from a cluster of small cells.

The number of available sequences that a node may include in, for example, a discovery signal may be finite. Thus, the number of available sequences may be increased by a conjugate operation (*e.g.,* complex conjugate), assuming the original (*e.g.,* base and/or orthogonal) sequence that is to be conjugated is a polyphase sequence consisting of in-phase and quadrature. To take advantage of these additional sequences, the method 500 may include an operation 510 for conjugating an original sequence to generate a conjugated sequence. For example, a base sequence may be generated according to the function

$$Bu_0(m) = \frac{1}{\sqrt{2}}\left(1 - 2 \cdot c(2m)\right) + j\frac{1}{\sqrt{2}}\left(1 - 2 \cdot c(2m+1)\right), m = 0,1,\dots$$

. The number of available sequences may be doubled by generating sequences $Bu_0(m) =$

$$\frac{1}{\sqrt{2}}\left(1 - 2 \cdot c(2m)\right) - j\frac{1}{\sqrt{2}}\left(1 - 2 \cdot c(2m+1)\right), m = 0,1,\dots$$

. In another embodiment, the conjugated sequence may be based on an existing signal, such as common reference signal ("CRS"), positioning reference signal ("PRS"), or demodulation reference signal ("DM RS"). The formulas used to generate such reference signals may be conjugated in a manner analogous to that described for the base sequence.

In some embodiments, operation 510 is omitted. In such embodiments, the unique sequence may be, for example, preconfigured (*e.g.,* hardcoded) at the node, received at the node from an eNB that is adapted to centrally manage the nodes in the cell cluster, configured through backhaul exchange, configured through a SON.

In one embodiment, the method 500 may include an operation 510 for storing the conjugated sequence so that the conjugated sequence may be accessed at a later time. This operation 510 may include storing a conjugated sequence in non-volatile storage, such as a mass storage device. Accordingly, the conjugated sequence may be persistently accessible, even where power or other services required for a node are interrupted.

With a conjugated sequence, an operation 520 of transmitting the conjugated sequence to a UE may be included in the method 500. In one embodiment, the conjugated sequence is transmitted to a specific UE (*e.g.,* using beamforming). In other embodiments, however, the uniform sequence may be broadcast so that the uniform sequence is detectable by a plurality of UEs that are within a coverage area of the transmitting node.

The conjugated sequence may be included in a discovery signal that operates on a new carrier type and is discontinuously transmitted with a relatively long periodicity - *e.g.,* the transmitting node does not always broadcast signals, but broadcasts the discovery signal on the order of hundreds of milliseconds. The conjugated sequence may be used by a receiving UE to distinguish cell providers in a wireless networking environment. In one embodiment, the conjugated sequence is transmitted from a low-powered radio access node while the original sequence is transmitted from an eNB so that a small cell is separately identifiable from a macro cell, respectively. In another embodiment, the original sequence and the conjugated sequence are allocated to collocated nodes comprising a cell cluster so that a first cell cluster is distinguishable from other cell clusters. For example, the pair of the original sequence and the conjugated sequence may be used as a base sequence in a discovery signal. In a third embodiment, the original sequence and the conjugated sequence are allocated to a single node so that node is identifiably separate from all other nodes, such as other nodes that are proximate to the transmitting node in a cell cluster. In even another embodiment, a first original sequence is uniform for all nodes in a cell cluster (*e.g.,* a base sequence), while a plurality of conjugated sequences generated from a plurality of original sequences may distinguish the nodes within that cell cluster.

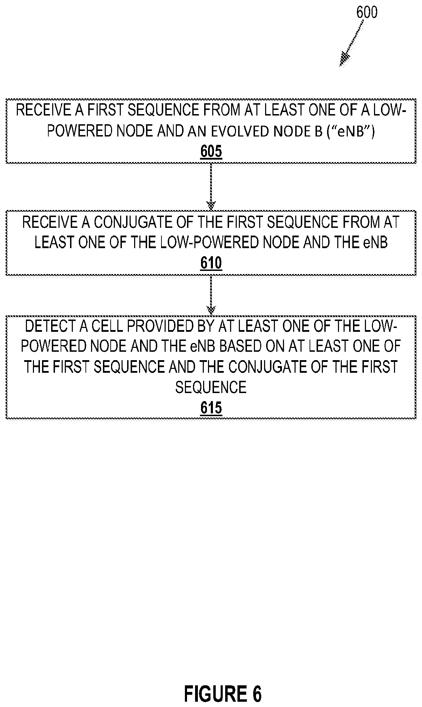

Turning now to **Figure 6,** a flow diagram is shown illustrating an embodiment of a method 600 for detecting cells by a UE in a wireless network environment. The method 600 may be performed by a UE, such as the UE 150 in the network 100 shown in **Figure 1.** While **Figure 6** illustrates a plurality of sequential operations, one of ordinary skill would understand that one or more operations of the method 600 may be transposed and/or performed contemporaneously.

At operation 605, the method 600 begins with the receiving of a first sequence from at least one of a low-powered radio access node and an eNB. Both the low-powered node and the eNB may be adapted to provide respective cells to a UE. In one embodiment, the first sequence is received by the UE in a signal, such as a discovery signal, transmitted by a node. The discovery signal may be received by the UE so that is able to identify and/or distinguish a cell which provides coverage to the UE.

As described above, the range of sequences available to be transmitted by cells in a wireless network environment may be appreciably increased (*e.g.,* doubled) where the conjugates of a first set of sequences are used. Accordingly, the method 600 includes an operation 610 for receiving a conjugate of the first sequence from at least one of the low-powered node and the eNB. Depending upon the embodiment, the conjugate sequence may be received by the UE in a signal (*e.g.,* a discovery signal) transmitted from a single node. For example, a low-powered radio access node may transmit a discovery signal that includes both the first sequence and the conjugate sequence. The UE may detect this discovery signal and, consequently, receive both the first sequence and the conjugate sequence. Alternatively, the first sequence and the conjugate sequence may be received as part of two signals transmitted by two different nodes. For example, an eNB may transmit the first sequence in a physical signal, while a low-powered radio access node may transmit the conjugate sequence. According to more embodiments, the UE will receive both the first sequence and the conjugate sequence; however, the source node(s) may vary.

At operation 615, the method 600 proceeds with detecting a cell provided by at least one of the low-powered radio access node and the eNB. A UE may be adapted to detect a cell provided by a node based on at least one of the first sequence and the conjugate sequence. For example, the UE may be served by a macro cell provided by an eNB, and the eNB may transmit the first sequence. The UE may be adapted to receive a discovery signal from a low-powered node (*e.g.,* a node with coverage overlaying the macro cell) and detect a small cell provided by that low-powered node based on a conjugate of the first sequence that is included in the discovery signal. In another embodiment, the low-powered radio access node transmits both the first sequence and the conjugate sequence. The UE may detect and/or identify a cell or a cell cluster that includes the cell based on this sequence pair. Based on the first sequence and the conjugate sequence, the UE (and/or an eNB with which the UE is to interact) may efficiently detect and/or identify as well as mitigate PCI confusion and/or collision.

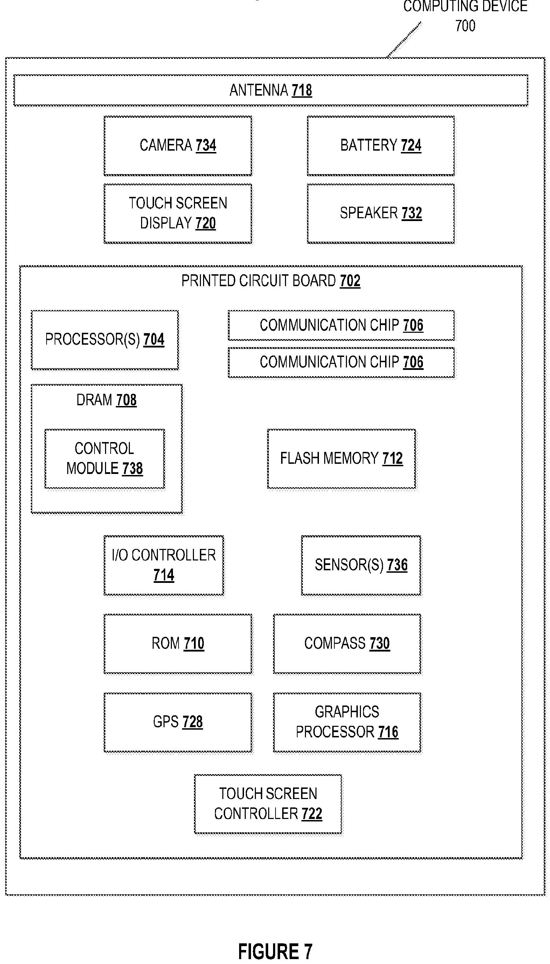

With respect to **Figure 7,** a block diagram illustrates an example computing device 700, in accordance with various embodiments. The eNB 105, low-powered radio access node 115, and/or UE 150 of **Figure 1** and described herein may be implemented on a computing device such as computing device 700. The computing device 700 may include a number of components, one or more processor 704 and at least one communication chips 706. Depending upon the embodiment, one or more of the enumerated components may comprise "circuitry" of the computing device 700, such as processing circuitry, measurement circuitry, storage circuitry, transceiver circuitry, and the like. In various embodiments, the one or more processor(s) 704 each may be a processor core. In various embodiments, the at least one communication chips 706 may be physically and electrically coupled with the one or more processor 704. In further implementations, the communication chips 706 may be part of the one or more processor 704. In various embodiments, the computing device 700 may include a printed circuit board ("PCB") 702. For these embodiments, the one or more processors 704 and communication chip 706 may be disposed thereon. In alternate embodiments, the various components may be coupled without the employment of the PCB 702.

Depending upon its applications, the computing device 700 may include other components that may or may not be physically and electrically coupled with the PCB 702. These other components include, but are not limited to, volatile memory (*e.g.,* dynamic random access memory 708, also referred to as "DRAM"), non-volatile memory (*e.g.,* read only memory 710, also referred to as "ROM"), flash memory 712, an input/output controller 714, a digital signal processor (not shown), a crypto processor (not shown), a graphics processor 716, one or more antenna(s) 718, a display (not shown), a touch screen display 720, a touch screen controller 722, a battery 724, an audio codec (not shown), a video code (not shown), a global positioning system ("GPS") or other satellite navigation device 728, a compass 730, an accelerometer (not shown), a gyroscope (not shown), a speaker 732, a camera 734, one or more sensors 736 (*e.g.,* a barometer, Geiger counter, thermometer, viscometer, rheometer, altimeter, or other sensor that may be found in various manufacturing environments or used in other applications), a mass storage device (*e.g.,* a hard disk drive, s solid state drive, compact disk and drive, digital versatile disk and drive, etc.) (not shown), and the like. In various embodiments, the processor 704 may be integrated on the same die with other components to form a system on a chip ("SOC").

In various embodiments, volatile memory (*e.g.,* DRAM 708), non-volatile memory (*e.g.,* ROM 710), flash memory 712, and the mass storage device (not shown) may include programming instructions configured to enable the computing device 700, in response to the execution by one or more process 704, to practice all or selected aspects of the data exchanges and methods described herein, depending on the embodiment of the computing device 700 used to implement such data exchanges and methods. More specifically, one or more of the memory components (*e.g.,* DRAM 708, ROM 710, flash memory 712, and the mass storage device) may include temporal and/or persistent copies of instructions that, when executed by one or more processors 704, enable the computing device 700 to operate one or more modules 738 configured to practice all or selected aspects of the data exchanges and method described herein, depending on the embodiment of the computing device 700 used to implement such data exchanges and methods.

The communication chips 706 may enable wired and/or wireless communications for the transfer of data to and from the computing device 700. The term "wireless" and its derivatives may be used to describe circuits, devices, systems, methods, techniques, communication channels, etc., that may communicate data through the use of modulated electromagnetic radiation through a non-solid medium. The term does not imply that the associated devices do not contain any wires, although in some embodiments they might not. The communication chips 706 may implement any of a number of wireless standards or protocols, including but not limited to Long Term Evolution ("LTE"), LTE Advanced ("LTE-A"), Institute of Electrical and Electronics Engineers ("IEEE") 702.20, General Packet Radio Service ("GPRS"), Evolution Data Optimized ("Ev-DO"), Evolved High Speed Packet Access ("HSPA+"), Evolved High Speed Downlink Packet Access ("HSDPA+"), Evolved High Speed Uplink Packet Access ("HSUPA+"), Global System for Mobile Communications ("GSM"), Enhanced Data Rates for GSM Evolution ("EDGE"), Code Division Multiple Access ("CDMA"), Time Division Multiple Access ("TDMA"), Digital Enhanced Cordless Telecommunications ("DECT"), Bluetooth, derivatives thereof, as well as other wireless protocols that are designated as 3G, 4G, 5G, and beyond. The computing device 700 may include a plurality of communication chips 706 adapted to perform different communication functions. For example, a first communication chip 706 may be dedicated to shorter range wireless communications, such as Wi-Fi and Bluetooth, whereas a second communication chip 706 may be dedicated to longer range wireless communications, such as GPS, EDGE, GPRS, CDMA, WiMAX, LTE, LTE-A, Ev-DO, and the like.

In various implementations, the computing device 700 may be a laptop, netbook, a notebook computer, an ultrabook computer, a smart phone, a computing tablet, a personal digital assistant ("PDA"), an ultra mobile personal computer, a mobile phone, a desktop computer, a server, a printer, a scanner, a monitor, a set-top box, an entertainment control unit (*e.g.,* a gaming console), a digital camera, a portable digital media player, a digital video recorder, and the like. In further embodiments, the computing device 700 may be another other electronic device that processes data.

Some portions of the preceding detailed description have been presented in terms of algorithms and symbolic representations of operations on data bits within a computer memory. These algorithmic descriptions and representations are the ways used by those skilled in the data processing arts to most effectively convey the substance of their work to others skilled in the art. An algorithm is here, and generally, conceived to be a self-consistent sequence of operations leading to a desired result. The operations are those requiring physical manipulations of physical quantities.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as those set forth in the claims below, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Embodiments described herein also relate to an apparatus for performing the illustrated operations. Such a computer program is stored in a non-transitory computer readable medium. A machine-readable medium includes any mechanism for storing information in a form readable by a machine (*e.g.,* a computer). For example, a machine-readable (*e.g.,* computer-readable) medium includes a machine (*e.g.,* a computer) readable storage medium (*e.g.,* read only memory ("ROM"), random access memory ("RAM"), magnetic disk storage media, optical storage media, flash memory devices).

The processes or methods depicted in the preceding figures can be performed by processing logic that comprises hardware (*e.g.,* circuitry, dedicated logic, etc.), software (*e.g.,* embodied on a non-transitory computer readable medium), or a combination of both. Although the processes or methods are described above in terms of some sequential operations, it should be appreciated that some of the operations described can be performed in a different order. Moreover, some operations can be performed in parallel rather than sequentially.

Embodiments described herein are not described with reference to any particular programming language. It will be appreciated that a variety of programming languages can be used to implement the teachings of embodiments described herein.

In the foregoing Specification, embodiments have been described with reference to specific exemplary embodiments thereof. It will be evident that various modifications can be made thereto without departing from the scope as set forth in the following claims. The Specification and drawings are, accordingly, to be regarded in an illustrative sense rather than a restrictive sense.

## Claims

1. An apparatus to be implemented in a user equipment, UE, (150) residing in a cell (120) included in a cell cluster, the apparatus comprising:

   transceiver circuitry (165) configured to receive a discovery signal from a node (115) associated with the cell (120), the discovery signal to include a base sequence that distinguishes the cell cluster that includes the cell (120) from other cell clusters and an orthogonal sequence that distinguishes the cell (120) from other cells in the cell cluster that includes the cell (120), wherein the base sequence is a Zadoff-Chu sequence or a pseudo-random sequence; and

   processing circuitry (155), communicatively coupled with the transceiver circuitry (165), and configured to determine an identity of the cell cluster that includes the cell (120) based on the base sequence and to determine an identity of the cell (120) based on the orthogonal sequence; and

   measurement circuitry (160), communicatively coupled with the transceiver circuitry (165), to measure a Radio Resource Management, RRM, metric value associated with the cell (120);

   wherein the transceiver circuitry (165) is further to transmit the measured RRM metric value to an eNB (105) that is to serve the UE (150) where a Radio Resource Control, RRC, state of the UE (150) is connected, and the processing circuitry (155) is further to compare the measured RRM metric value with a threshold value where a RRC state of the UE (150) is idle, the comparison to the threshold value enabling the UE to determine whether to camp on the cell.

2. The apparatus of claim 1, wherein the identity of the cell (120) is at least part of a physical layer cell identity, PCI.

3. The apparatus of any of claims 1-2, wherein the transceiver circuitry is further to transmit the at least part of the PCI to an evolved Node B, eNB.

4. The apparatus of any of claims 1-3, wherein the orthogonal sequence is a code division multiplexed sequence, a frequency division multiplexed sequence, or a time division multiplexed sequence.

5. A non-transitory computing device-readable medium comprising computing device-executable instructions for use in a user equipment, UE, (150) residing in a cell (120) included in a cell cluster in a wireless network (100), wherein the instructions, in response to execution by a computing device, cause the computing device to:

   receive a discovery signal from a node associated with the cell, the discovery signal to include a base sequence that distinguishes the cell cluster that includes the cell from other cell clusters and an orthogonal sequence that distinguishes the cell from other cells in the cell cluster that includes the cell, wherein the base sequence is a Zadoff-Chu sequence or a pseudo-random sequence and determining an identity of the cell cluster that includes the cell based on the base sequence and determining an identity of the cell based on the orthogonal sequence; measure a Radio Resource Management, RRM, metric value associated with the wireless cell (120); transmit the measured RRM metric value to an eNB (105) that is to serve the UE (150) where a Radio Resource Control, RRC, state of the UE (150) is connected; and compare the measured RRM metric value with a threshold value where a RRC state of the UE (150) is idle, the comparison to the threshold value enabling the UE to determine whether to camp on the cell.

## Patentansprüche

1. Vorrichtung, die in einem Benutzergerät, UE, (150) zu implementieren ist, das sich in einer Zelle (120) befindet, die in einem Zellencluster enthalten ist, wobei die Vorrichtung umfasst:

   eine Transceiver-Schaltungsanordnung (165), die konfiguriert ist, ein Entdeckungssignal von einem Knoten (115) zu empfangen, der der Zelle (120) zugeordnet ist, wobei das Entdeckungssignal eine Basissequenz, die den Zellencluster, der die Zelle (120) enthält, von anderen Zellenclustern unterscheidet, und eine orthogonale Sequenz, die die Zelle (120) von anderen Zellen in dem Zellencluster unterscheidet, der die Zelle (120) enthält, enthalten soll, wobei die Basissequenz eine Zadoff-Chu-Sequenz oder eine Pseudozufallssequenz ist; und eine Verarbeitungsschaltungsanordnung (155), die kommunikativ mit der Transceiver-Schaltungsanordnung (165) gekoppelt ist und konfiguriert ist, eine Identität des Zellenclusters, der die Zelle (120) enthält, basierend auf der Basissequenz zu bestimmen und eine Identität der Zelle (120) basierend auf der orthogonalen Sequenz zu bestimmen; und eine Messschaltungsanordnung (160), die kommunikativ mit der Transceiver-Schaltungsanordnung (165) gekoppelt ist, um einen Funkressourcenverwaltungs-, RRM-, Metrikwert zu messen, der der Zelle (120) zugeordnet ist; wobei die Transceiver-Schaltungsanordnung (165) ferner den gemessenen RRM-Metrikwert an einen eNB (105) senden soll, der das UE (150) bedienen soll, wenn ein Funkressourcensteuerungs-, RRC-, Zustand des UE (150) verbunden ist, und die Verarbeitungsschaltungsanordnung (155) ferner den gemessenen RRM-Metrikwert mit einem Schwellenwert vergleichen soll, wenn ein RRC-Zustand des UE (150) ruhend ist, wobei der Vergleich mit dem Schwellenwert dem UE ermöglicht zu bestimmen, ob es auf der Zelle verweilen soll.

2. Vorrichtung nach Anspruch 1, wobei die Identität der Zelle (120) mindestens Teil einer Zellenidentität der physikalischen Schicht, PCI, ist.

3. Vorrichtung nach einem der Ansprüche 1-2, wobei die Transceiver-Schaltungsanordnung ferner den mindestens Teil der PCI an einen entwickelten Knoten B, eNB, senden soll.

4. Vorrichtung nach einem der Ansprüche 1-3, wobei die orthogonale Sequenz eine Codemultiplexsequenz, eine Frequenzmultiplexsequenz oder eine Zeitmultiplexsequenz ist.

5. Nichtflüchtiges computervorrichtungslesbares Medium, das computervorrichtungsausführbare Anweisungen zur Verwendung in einem Benutzergerät, UE, (150) umfasst, das sich in einer Zelle (120) befindet, die in einem Zellencluster in einem drahtlosen Netzwerk (100) enthalten ist, wobei die Anweisungen als Reaktion auf die Ausführung durch eine Computervorrichtung die Computervorrichtung zu Folgendem veranlassen:

   Empfangen eines Entdeckungssignals von einem Knoten, der der Zelle zugeordnet ist, wobei das Entdeckungssignal eine Basissequenz, die den Zellencluster, der die Zelle enthält, von anderen Zellenclustern unterscheidet, und eine orthogonale Sequenz, die die Zelle von anderen Zellen in dem Zellencluster unterscheidet, der die Zelle enthält, enthalten soll, wobei die Basissequenz eine Zadoff-Chu-Sequenz oder eine Pseudozufallssequenz ist, und Bestimmen einer Identität des Zellenclusters, der die Zelle enthält, basierend auf der Basissequenz und Bestimmen einer Identität der Zelle basierend auf der orthogonalen Sequenz; Messen eines Funkressourcenverwaltungs-, RRM-, Metrikwerts, der der drahtlosen Zelle (120) zugeordnet ist; Senden des gemessenen RRM-Metrikwerts an einen eNB (105), der das UE (150) bedienen soll, wenn ein Funkressourcensteuerungs-, RRC-, Zustand des UE (150) verbunden ist; und Vergleichen des gemessenen RRM-Metrikwerts mit einem Schwellenwert, wenn ein RRC-Zustand des UE (150) ruhend ist, wobei der Vergleich mit dem Schwellenwert dem UE ermöglicht zu bestimmen, ob es auf der Zelle verweilen soll.

## Revendications

1. Un appareil destiné à être implémenté dans un équipement utilisateur, UE, (150) résidant dans une cellule (120) faisant partie d'un groupement de cellules, l'appareil comprenant :

   une circuiterie émettrice/réceptrice (165) configurée pour recevoir un signal de découverte en provenance d'un noeud (115) associé à la cellule (120), le signal de découverte devant inclure une séquence de base qui distingue le groupement de cellules incluant la cellule (120) des autres groupements de cellules, et une séquence orthogonale qui distingue la cellule (120) des autres cellules du groupement de cellules incluant la cellule (120), la séquence de base étant une séquence de Zadoff-Chu ou une séquence pseudo-aléatoire ; et
   une circuiterie de traitement (155), couplée de manière communicante à la circuiterie émettrice/réceptrice (165), et configurée pour déterminer une identité du groupement de cellules qui inclut la cellule (120) sur la base de la séquence de base et pour déterminer une identité de la cellule (120) sur la base de la séquence orthogonale ; et une circuiterie de mesure (160), couplée de manière communicante à la circuiterie émettrice/réceptrice (165), pour mesurer une valeur de métrique de gestion de ressource radio, RRM, associée à la cellule (120) ;
   dans lequel la circuiterie émettrice/réceptrice (165) sert en outre à transmettre la valeur de métrique RRM mesurée à un eNB (105) qui doit desservir l'UE (150) lorsqu'un état de contrôle de ressource radio, RRC, de l'UE (150) est connecté, et la circuiterie de traitement (155) sert en outre à comparer la valeur de métrique RRM mesurée à une valeur de seuil lorsqu'un état RRC de l'UE (150) est inactif, la comparaison avec la valeur de seuil permettant à l'UE de déterminer s'il y a ou non lieu de stationner sur la cellule.

2. L'appareil de la revendication 1, dans lequel l'identité de la cellule (120) est au moins une partie d'une identité de cellule de couche physique, PCI.

3. L'appareil de l'une des revendications 1 à 2, dans lequel la circuiterie émettrice/réceptrice sert en outre à transmettre au moins une partie de la PCI à un noeud B évolué, eNB.

4. L'appareil de l'une des revendications 1 à 3, dans lequel la séquence orthogonale est une séquence multiplexée par répartition en code, une séquence multiplexée par répartition fréquentielle, ou une séquence multiplexée par répartition temporelle.

5. Un support non transitoire lisible par un dispositif informatique, comprenant des instructions exécutables par un dispositif informatique destiné à un équipement utilisateur, UE, (150) résidant dans une cellule (120) faisant partie d'un groupement de cellules d'un réseau sans fil (100), dans lequel les instructions, en réponse à l'exécution par un dispositif informatique, font en sorte que le dispositif informatique :

   reçoive un signal de découverte en provenance d'un noeud (115) associé à la cellule (120), le signal de découverte devant inclure une séquence de base qui distingue le groupement de cellules incluant la cellule (120) des autres groupements de cellules, et une séquence orthogonale qui distingue la cellule (120) des autres cellules du groupement de cellules incluant la cellule (120), la séquence de base étant une séquence de Zadoff-Chu ou une séquence pseudo-aléatoire, et détermine une identité du groupement de cellules qui inclut la cellule (120) sur la base de la séquence de base et pour déterminer une identité de la cellule (120) sur la base de la séquence orthogonale ;
   mesure une valeur de métrique de gestion de ressource radio, RRM, associée à la cellule (120) ;
   transmette la valeur de métrique RRM mesurée à un eNB (105) qui doit desservir l'UE (150) lorsqu'un état de contrôle de ressource radio, RRC, de l'UE (150) est connecté ; et
   compare la valeur de métrique RRM mesurée à une valeur de seuil lorsqu'un état RRC de l'UE (150) est inactif, la comparaison avec la valeur de seuil permettant à l'UE de déterminer s'il y a ou non lieu de stationner sur la cellule.

**FIGURE 1**

EP 2 946 606 B1

FIGURE 2

300

RECEIVE, FROM A NODE ASSOCIATED WITH A CELL, A
DISCOVERY SIGNAL THAT INCLUDES A BASE SEQUENCE AND
AN ORTHOGONAL SEQUENCE
305

IDENTIFY AN IDENTITY OF A CELL CLUSTER THAT INCLUDES
THE CELL BASED ON THE BASE SEQUENCE
310

IDENTIFY AN IDENTITY OF THE CELL BASED ON THE
ORTHOGONAL SEQUENCE
315

MEASURE AT LEAST ONE RADIO RESOURCE MANAGEMENT
("RRM") METRIC VALUE ASSOCIATED WITH THE CELL
320

RADIO RESOURCE
CONTROL ("RRC")
STATE

RRC_CONNECTED

RRC_IDLE

REPORT THE MEASURED RRM METRIC
VALUE TO AN EVOLVED NODE B
325

COMPARE MEASURED RRM METRIC VALUE
TO A THRESHOLD
330

CAMP ON THE CELL BY READING THE
MASTER INFORMATION BLOCK AND SYSTEM
INFORMATION BLOCK
335

FIGURE 3

400

PROVIDE A WIRELESS CELL TO A USER EQUIPMENT ("UE")
**405**

GENERATE A FIRST SEQUENCE THAT IS UNIFORM WITH A
SECOND SEQUENCE THAT IS ASSOCIATED WITH A SECOND
CELL IN A CELL CLUSTER
**410**

GENERATE A UNIQUE SEQUENCE THAT IS TO DISTINGUISH THE
CELL FROM THE SECOND CELL IN THE CELL CLUSTER
**415**

TRANSMIT, TO THE UE, THE FIRST SEQUENCE THAT IS UNIFORM
WITH THE SECOND SEQUENCE THAT IS ASSOCIATED WITH THE
SECOND CELL IN THE CELL CLUSTER (AND THE UNIQUE
SEQUENCE)
**420**

# FIGURE 4

500

PROVIDE A WIRELESS CELL TO A USER EQUIPMENT ("UE")
505

CONJUGATE AN ORIGINAL SEQUENCE TO GENERATE A
CONJUGATED SEQUENCE
510

STORE THE CONJUGATED SEQUENCE THAT IS THE CONJUGATE
OF THE ORIGINAL SEQUENCE
515

TRANSMIT THE CONJUGATED SEQUENCE TO THE UE
520

FIGURE 5

600

RECEIVE A FIRST SEQUENCE FROM AT LEAST ONE OF A LOW-POWERED NODE AND AN EVOLVED NODE B ("eNB")
605

RECEIVE A CONJUGATE OF THE FIRST SEQUENCE FROM AT LEAST ONE OF THE LOW-POWERED NODE AND THE eNB
610

DETECT A CELL PROVIDED BY AT LEAST ONE OF THE LOW-POWERED NODE AND THE eNB BASED ON AT LEAST ONE OF THE FIRST SEQUENCE AND THE CONJUGATE OF THE FIRST SEQUENCE
615

FIGURE 6

COMPUTING DEVICE
700

ANTENNA 718

CAMERA 734

BATTERY 724

TOUCH SCREEN
DISPLAY 720

SPEAKER 732

PRINTED CIRCUIT BOARD 702

PROCESSOR(S) 704

COMMUNICATION CHIP 706

COMMUNICATION CHIP 706

DRAM 708

CONTROL
MODULE 738

FLASH MEMORY 712

I/O CONTROLLER
714

SENSOR(S) 736

ROM 710

COMPASS 730

GPS 728

GRAPHICS
PROCESSOR 716

TOUCH SCREEN
CONTROLLER 722

FIGURE 7

**EP 2 946 606 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010067500 A1
- US 2010190488 A1
- US 20120213109 A1
- US 20140204853 A1

**Non-patent literature cited in the description**

- **YI-PIN ERIC WANG.** cell search in W-CDMA. *IEEE Journal on selected areas in communications,* August 2000, vol. 18 (8